# EUROPÄISCHE PATENTANMELDUNG

(11) **EP 4 371 400 A1**
(43) Veröffentlichungstag der Anmeldung: **22.05.2024**
(21) Anmeldenummer: 23207334.6
(22) Anmeldetag: 02.11.2023
(51) Int. Cl.: A01F 15/10

(54) **ERNTEBERGUNGSGERÄT UND VERFAHREN**

(30) Priorität: 21.11.2022 DE 102022130751
(71) Anmelder: Deere & Company, Moline, IL 61265 (US)
(72) Erfinder: CHAPON, EMMANUEL, 68163 Mannheim (DE); BLANCHON, GUILLAUME, 68163 Mannheim (DE)
(74) Vertreter: Stein, Stefan

(57) **Zusammenfassung**

Es wird eine Erntebergungsgerät (10) mit einem Rahmen (14), der sich über wenigstens zwei Räder (20a, b) mittels zumindest eines Betätigungselements (54) höhenverstellbar auf dem Untergrund (22) abstützt, einer an dem Rahmen (14) höhenveränderlich aufgenommenen Aufnahmeeinrichtung (28) und einer beweglich an die Aufnahmeeinrichtung (28) anschließenden Fördereinrichtung (34), vorgeschlagen, wobei wenigstens ein erster Sensor (S1) vorgesehen ist, der einen Winkel (a) zwischen der Aufnahmeeinrichtung (28) und der Fördereinrichtung (34) aufnimmt und das Betätigungselement (54) die Höhe (H) des Rahmens (14) über dem Untergrund (22) in Abhängigkeit von einem von dem Sensor (S1) ermittelten Wert bestimmt. Darüber hinaus wird ein Verfahren zum Betrieb eines derartigen Erntebergungsgeräts (10) vorgeschlagen.

## Beschreibung

Die Erfindung betrifft ein Erntebergungsgerät mit einem Rahmen, der sich über wenigstens zwei Räder mittels zumindest eines Betätigungselements höhenverstellbar auf dem Untergrund abstützt, einer an dem Rahmen höhenveränderlich aufgenommenen Aufnahmeeinrichtung und einer beweglich an die Aufnahmeeinrichtung anschließenden Fördereinrichtung und ein Verfahren zum Betrieb eines solchen Erntebergungsgeräts.

Landwirtschaftliche Erntebergungsgeräte sind bekannt. Derartige Geräte können beispielsweise in der Art einer Presse, einer Press-Wickelkombination oder auch eines Ladewagens ausgebildet sein und weisen häufig eine auch als Pick-Up bezeichnete Aufnahmeeinrichtung und eine an diese anschließende Fördereinrichtung auf. Erntebergungsgeräte können so ausgebildet sein, dass sich das Erntebergungsgerät beispielsweise in hügeligem Gelände diesem anpasst. Ein derartiges Erntebergungsgerät wird beispielsweise in der JP-A-2009000067 gezeigt.

Bei bekannten Erntebergungsgeräten kann es bei unterschiedlichen Umgebungsbedingungen, wie beispielsweise einem nassem oder weichem Untergrund oder auch in unebenem Gelände, vorkommen, dass das Erntegut nicht optimal gefördert wird und es in einem besonders ungünstigem Fall zu einer Verstopfung kommen kann, die gegebenenfalls durch eine Bedienungsperson manuell entfernt werden muss.

Die der Erfindung zugrunde liegende Aufgabe wird daher darin gesehen, ein Erntebergungsgerät vorzusehen, durch welches die vorgenannten Nachteile überwunden werden.

Die Aufgabe wird erfindungsgemäß durch die Lehre der Patentansprüche 1 bzw. 9 gelöst. Weitere vorteilhafte Ausgestaltungen und Weiterbildungen der Erfindung gehen aus den Unteransprüchen hervor.

Diesbezüglich weist ein Erntebergungsgerät einen Rahmen auf, der sich überwenigstens zwei Räder mittels zumindest eines Betätigungselements höhenverstellbar auf dem Untergrund abstützt. Darüber hinaus ist eine an dem Rahmen höhenveränderlich aufgenommene Aufnahmeeinrichtung vorgesehen, welche in der Art einer Pick-Up ausgebildet sein bzw. als solche bezeichnet werden kann. Eine solche Aufnahmeeinrichtung kann sich beispielsweise über Räder, insbesondere über frei schwenkbare Pendelräder oder in anderer Art und Weise auf dem Untergrund abstützen, beispielsweise um dessen Kontur zu folgen. An die Aufnahmeeinrichtung schließt sich beweglich eine Fördereinrichtung an. Über diese Fördereinrichtung kann das Erntegut beispielsweise einer Weiterverarbeitung oder auch einem Laderaum bzw. einer Ladefläche zugeführt werden. Die Fördereinrichtung kann beispielsweise Fördermittel oder auch Mittel zur Zerkleinerung des Ernteguts aufweisen. Darüber hinaus ist wenigstens ein erster Sensor vorgesehen, der einen Winkel zwischen der Aufnahmeeinrichtung und der Fördereinrichtung aufnimmt, wobei das Betätigungselement die Höhe des Rahmens über dem Untergrund in Abhängigkeit von einem von dem Sensor ermittelten Wert bestimmt. Eine derartige Anordnung ermöglicht auch bei schwierigen Umgebungsbedingungen, beispielsweise bei hügeligem Gelände oder wenn das Erntebergungsgerät über Vertiefungen, Kanten, Abbrüche oder ähnliches im Boden oder aber bei weichem Untergrund, in dem es zu einem Einsinken des Geräts oder auch eines oder mehrerer seiner Räder kommen kann, einen gleichmäßigen Gutfluss zwischen der Aufnahmeeinrichtung und der Fördereinrichtung und kann so einem Verstopfen vorbeugen. Auf diese Weise können Unterbrechungen des Arbeitsablaufs reduziert und die Arbeit einer Bedienungsperson erleichtert werden, da diese nicht oder zumindest seltener ihren Arbeitsplatz verlassen muss, um eine Verstopfung zu entfernen. Der Sensor kann in der Art eines Potentiometers, eines induktiven Sensors, eines Ultraschallsensors oder eines jeden anderen geeigneten Sensors ausgebildet sein. Bei dem Erntebergungsgerät handelt es sich insbesondere um eine landwirtschaftliche Presse, vorzugsweise um eine Presse zur Herstellung rundzylindrischer Ballen aus Erntegut, beispielsweise in der Art von Heu, Stroh oder Silage oder eine Press-Wickelkombination. Es ist aber auch denkbar, dass das Erntebergungsgerät in der Art einer Presse zur Herstellung quaderförmiger Ballen oder als ein Ladewagen ausgebildet ist. Derartige Erntebergungsgeräte können an eine landwirtschaftliche Zugmaschine, wie beispielsweise einen Ackerschlepper, anhängbar bzw. von einem solchen gezogen werden. Es ist aber auch denkbar, dass es sich um ein selbstfahrendes Erntebergungsgerät handelt.

Ist eine elektronische Steuer- bzw. Regeleinrichtung vorgesehen, so kann sie den von dem Sensor ermittelten Wert aufnehmen, verarbeiten und das Betätigungselement zumindest in Abhängigkeit von dem Wert steuern bzw. regeln.

Eine besonders gleichmäßige und störungsfreie Förderung des aufgenommenen Ernteguts ist möglich, wenn das Betätigungselement bzw. die Steuer- bzw. Regeleinrichtung den Winkel zumindest im Wesentlichen konstant hält. Der Winkel repräsentiert dabei die Winkelstellung zwischen der Aufnahmeeinrichtung und der Fördereinrichtung. Darüber hinaus oder alternativ kann eine gleichmäßige Förderung begünstigt werden, wenn das Betätigungselement bzw. die Steuer- bzw. Regeleinrichtung die Höhe, respektive die Höhe des Rahmens des Erntebergungsgeräts über dem Untergrund verändert, wenn ein Schwellwert unter- bzw. überschritten wird.

Besonders günstig ist es, wenn ein weiterer Sensor vorgesehen ist, der einen Abstand der Aufnahmeeinrichtung vom Untergrund aufnimmt. Vorzugsweise bestimmen das Betätigungsmittel bzw. die Steuer- bzw. Regeleinrichtung die Höhe des Rahmens über dem Untergrund in Abhängigkeit der von beiden Sensoren ermittelten Werte. Auch dieser Sensor kann in jeder geeigneten Art und Weise, beispielsweise als ein Induktionssensor, ein Ultraschallsensor oder ein Potentiometer ausgebildet sein.

Ein besonders einfacher Aufbau ergibt sich, wenn die Räder einzeln um einen Schwenkpunkt schwenkbar an dem Rahmen angebracht sind und/oder dass wenigstens ein Schwenkarm vorgesehen ist, der vorzugsweise einenends an dem Rahmen angebracht ist und an dem andernends wenigstens eines der Räder drehbar aufgenommen ist. Der Schwenkpunkt kann beispielsweise durch einen Bolzen bestimmt werden, über den der Schwenkarm an dem Rahmen angebracht ist. Vorzugsweise greift das Betätigungselement einenends an dem Rahmen und andernends an dem Schwenkarm an. Es kann dabei vorteilhaft für die Geometrie sein, wenn das Betätigungselement zwischen dem Schwenkpunkt und dem Rad an dem Schwenkarm angreift. Es ist alternativ aber auch denkbar, dass die Räder auf einer gemeinsamen Achse aufgenommen werden.

Das Betätigungselement kann in der Art eines Elektromotors oder aber anderweitig geeignet ausgebildet sind. Besonders einfach in der Ausführung und/oder gut in den Aufbau eines Erntebergungsgeräts integrierbar ist es, wenn das Betätigungselement in der Art eines Hydraulikmotors ausgebildet ist. Ein solcher Hydraulikmotor weist vorzugsweise einen Zylinder und einen Kolben auf.

Ein besonders vorteilhafter Aufbau ergibt sich, wenn zwei Schwenkarme und/oder zwei Betätigungselemente vorgesehen sind. Vorzugsweise ist einer der Schwenkarme und/oder eines der Betätigungselemente auf einer ersten Seite des Rahmens und der andere Schwenkarm und/oder das andere der Betätigungselemente auf der gegenüberliegenden Seite des Rahmens vorgesehen. Insbesondere wenn die Räder des Erntebergungsgeräts auf einer gemeinsamen Achse aufgenommen sind, ist es denkbar, nur einen Schwenkarm oder insbesondere nur ein Betätigungselement vorzusehen.

Das Erntebergungsgerät kann beispielsweise in der Art eines Ladewagens ausgebildet sein. Besonders günstig ist es aber, wenn das Erntebergungsgerät wenigstens eine Presse zur Herstellung eines Ballens und/oder einen Ballenwickler zur Umwicklung eines Ballens mit einem Hüllmaterial aufweist.

Gemäß einem Verfahren zum Betrieb eines zuvor beschriebenen Erntebergungsgeräts nimmt ein erster Sensor einen Winkel zwischen der Aufnahmeeinrichtung und der Fördereinrichtung auf. Das Betätigungselement bzw. die Steuer- bzw. Regeleinrichtung verändert die Höhe des Rahmens über dem Untergrund zumindest in Abhängigkeit von einem von dem ersten Sensor ermittelte Wert, insbesondere wenn dieser Wert einen Schwellenwert über- bzw. unterschreitet, um den Winkel zumindest im Wesentlichen konstant zu halten.

Ist ein weiterer Sensor vorgesehen, kann dieser einen Abstand der Aufnahmeeinrichtung über dem Untergrund aufnehmen und das Betätigungselement bzw. die Steuer- bzw. Regeleinrichtung die Höhe des Rahmens über dem Untergrund in Abhängigkeit von den von beiden Sensoren ermittelten Werten bestimmen.

Anhand der Zeichnung, die ein Ausführungsbeispiel der Erfindung zeigt, werden nachfolgend die Erfindung sowie weitere Vorteile und vorteilhafte Weiterbildungen der Erfindung und Ausgestaltungen der Erfindung näher beschrieben und erläutert.

Es zeigt:
- Fig. 1: eine Seitenansicht eines Erntebergungsgerät, welches sich über Räder auf dem Untergrund abstützt und das gemäß dem vorliegenden Ausführungsbeispiel in der Art einer Press-Wickelkombination ausgebildet ist,
- Fig. 2: eine vergrößerte Darstellung der Anlenkung der Räder mittels einem Schwenkarm an einem Rahmen des Ernteberungsgeräts, wobei das bezogen auf die übliche Betriebsrichtung des Erntebergungsgerät linke der beiden Räder zur besseren Visualisierung nicht gezeigt wird, und die
- Fig. 3 a-b: eines der Räder, dessen Radnabe, den diesem Rad zugeordneten Schwenkarm sowie das entsprechende Betätigungselement bezogen auf das Erntebergungsgerät von Innen betrachtet in einer ersten und einer zweiten Stellung.

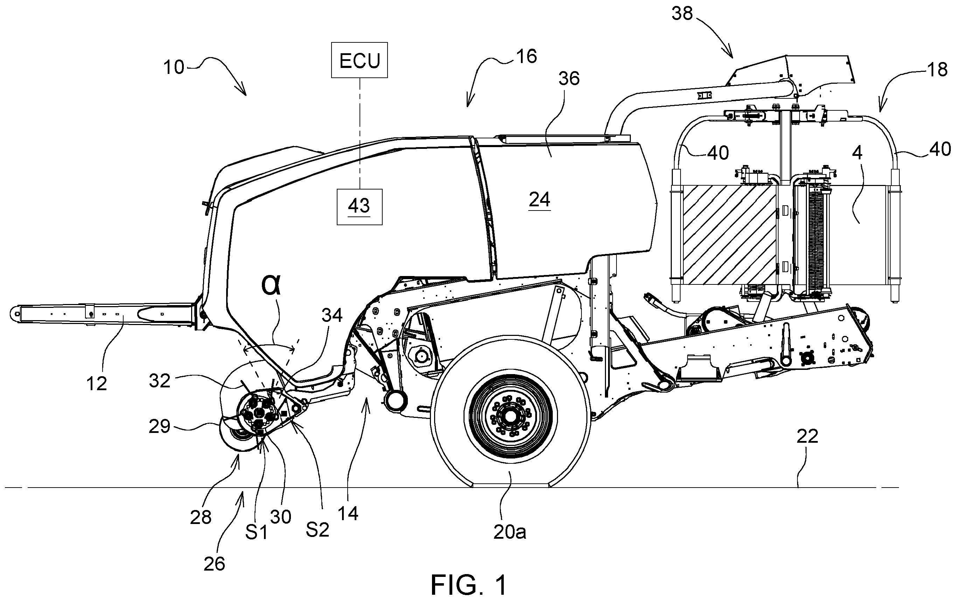

Die Figur 1 zeigt eine schematische Seitenansicht eines Erntebergungsgeräts 10. Das Erntebergungsgerät 10 gemäß dem vorliegenden Ausführungsbeispiel ist in der Art einer landwirtschaftlichen Kombipresse bzw. einer Press-Wickelkombination ausgebildet und kann über eine Deichsel 12 an ein nicht gezeigtes Zugfahrzeug, beispielsweise einen landwirtschaftlichen Ackerschlepper angehängt bzw. mit einem solchen gekoppelt werden. Es ist aber auch denkbar, dass es sich bei dem Erntebergungsgerät um eine Presse, beispielsweise eine Rund- oder eine Quaderballenpresse, einen Ladewagen oder jedes andere geeignete Gerät zur Aufnahme landwirtschaftlichen Ernteguts handelt.

Das Erntebergungsgerät 10 weist einen Rahmen 14 auf, welcher eine Presse 16 und einen Ballenwickler 18 trägt. Der Rahmen 14 stützt sich über zwei Räder 20a, b, auf die im Folgenden noch genauer eingegangen werden wird und von denen in der Figur 1 nur das bezogen auf die übliche Betriebsrichtung des Erntebergungsgerät linke Rad 20a gezeigt wird, auf dem Untergrund 22 ab. Die gezeigte Presse 16 ist in der Art einer einer Rundballenpresse ausgebildet. Eine solche Rundballepresse kann beispielsweise als eine Presse mit festem Pressraum als auch als eine Presse mit variablem Pressraum ausgebildet sein. Es ist aber auch denkbar, die Presse in der Art einer Quaderballenpresse auszubilden.

Die Presse 16 wiederum weist einen Pressraum 24 zur Bildung eines rundzylindrischen Ballens aus Erntegut auf. In einem der Deichsel 12 zugewandten Bereich 26 des Erntebergungsgeräts 10 ist eine Pick-Up bzw. eine Aufnahmeeinrichtung 28 zur Aufnahme von auf dem Untergrund 22 liegendem Erntegut vorgesehen. Die Aufnahmeeinrichtung 28 stützt sich über nur andeutungsweise gezeigte, vorzugsweise in der Art von Pendelrädern ausgebildete, Stützräder 29 auf dem Untergrund 22 ab und weist einen Rotor 30 auf, welche das Erntegut mittels umlaufender Zinken 32 in eine Fördereinrichtung 34 verbringt, über die das Erntegut in den Pressraum 24 der Presse 16 gelangt. Die Fördereinrichtung 34 kann in bekannter Art und Weise beispielsweise einen Förderrotor oder auch einen Schneideinrichtung aufweisen. In dem Pressraum 24 wird das Erntegut zu einem nicht gezeigten Ballen gepresst, welcher die Presse 10 nach Abschluss des Pressvorgangs über eine nach oben verschwenkbare Klappe 36 verlassen kann, um an den Ballenwickler 18 übergeben zu werden.

Der Ballenwickler 18 ist in üblicher Art und Weise ausgeführt und weist zwei umlaufend antreibbar an einem Rahmen 38 aufgenommene Wickelarme 40 auf, mittels der der Ballen mit einem Hüllmaterial 42 umhüllt werden kann. Bei dem Hüllmaterial 42 kann es sich beispielsweise um ein Netz handeln, vorteilhafterweise handelt es sich bei dem Hüllmaterial 42 aber um einen Folie, welche den Ballen vor Umwelteinflüssen schützen und/oder aber luftdicht, beispielsweise zur Herstellung von Silage, umhüllen kann.

Das Erntebergungsgerät 10 weist ein Betätigungssystem 43, dass in dem gezeigten Ausführungsbeispiel in bekannter Art und Weise als ein Hydrauliksystem ausgebildet ist und nur andeutungsweise dargestellt wird, und eine elektronische Steuer- bzw. Regeleinrichtung ECU auf, welche ebenfalls nur andeutungsweise gezeigt wird. Zwischen der Aufnahmeeinrichtung 28 und der Fördereinrichtung 34 ist ein erster Sensor S1 und an der Aufnahmeeinrichtung 28 ein zweiter Sensor S2 vorgesehen. Der erste Sensor S1 ermittelt einen Winkel α zwischen der Aufnahmeeinrichtung 28 und der Fördereinrichtung 34, der zweite Sensor S2 dient zur Ermittlung eines Abstands D1 zwischen der Aufnahmeeinrichtung 28 und dem Untergrund 22. Ausgabewerte der Sensoren S1, S2 werden an die Steuer- bzw. Regeleinrichtung ECU übertragen. Bei den Sensoren kann es sich beispielsweise um Potentiometer, induktive Sensoren oder auch um Ultraschallsensoren handeln Die Sensoren können aber auch in jeder geeigneten Art und Weise und sowohl gleich oder unterschiedlich ausgebildet sein. Auf die Funktionsweise der Sensoren S1, S2 wird im Folgenden noch genauer eingegangen werden.

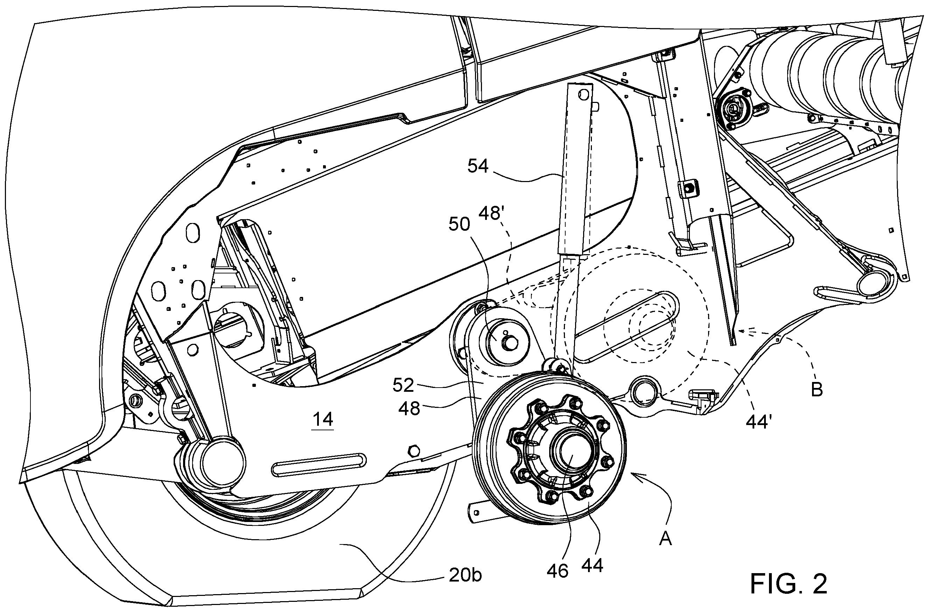

Es wird nun auch auf die Figur 2 der Zeichnung eingegangen, in der die Anlenkung der Räder 20a,b an dem Rahmen 14 vergrößert dargestellt wird. Die Räder 20a, b sind mit dem Rahmen 14 separat schwenkbar verbunden bzw. einzeln aufgehängt. Zur Verdeutlichung wird das in Betriebsrichtung des Erntebergungsgeräts 10 linke Rad 20a nicht gezeigt, so dass die Nabe 44 des Rades 20a sichtbar ist.

Im Folgenden wird nun auf die höhenveränderliche Anlenkung des Rades 20a eingegangen werden. Die Anlenkung des Rades 20b ist entsprechend spiegelbildlich ausgeführt. Die Nabe 44 des Rades 20a ist drehbar auf einen Achsstummel 46 aufgesetzt, der fest mit einem Schwenkarm 48 verbunden. Der Schwenkarm 48 wiederum ist auf einen fest mit dem Rahmen 14 verbundenen, einen Schwenkpunkt des Schwenkarms 48 bestimmenden Bolzen 50 schwenkbar angebracht. In der Figur 2 wird der Schwenkarm 48 und die Nabe 44 in einer ersten, unteren Stellung A und in einer zweiten, oberen Stellung B gezeigt.

An einer Oberseite 52 des Schwenkarms 48 greift zwischen dem Bolzen 50 und dem Achsstummel 46, dem Achsstummel 46 benachbart ein Betätigungselement 54 an. Gemäß dem vorliegenden Ausführungsbeispiel ist das Betätigungselement 54 als ein Hydraulikmotor ausgebildet. Es ist aber auch die Verwendung eines oder mehrerer anderer geeigneter Betätigungselemente denkbar, so könnte beispielsweise anstelle eines Hydraulikmotors auch ein Elektromotor vorgesehen sein. Das Betätigungselement 54 ist mit dem Betätigungssystem 43 verbunden und wird mittels der Steuer- bzw. Regeleinheit ECU angesteuert bzw. geregelt.

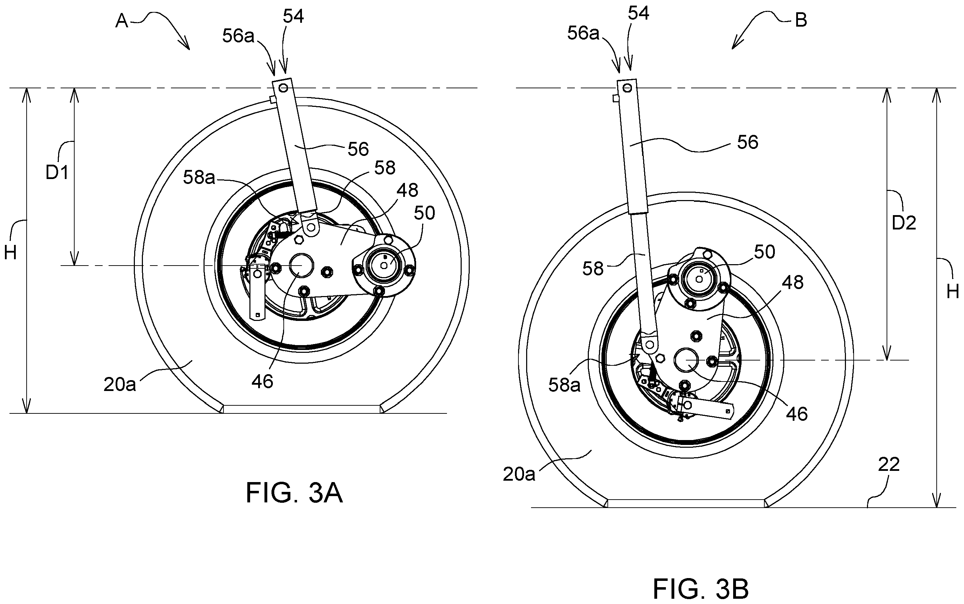

Es wird nun auch auf die Figuren 3a und b der Zeichnung Bezug genommen, in denen das Rad 20a, der Achslenker 48 und das Betätigungselement 54 in der Figur 3a in der Stellung A und in der Figur 3b in der Stellung B gemäß der Darstellung in der Figur 2 gezeigt wird. Hier wird deutlich, dass das als Hydraulikmotor ausgebildete Betätigungselement 54 einen Zylinder 56 und einen Kolben 58 aufweist. Der Zylinder 56 ist in einem Endbereich 56a schwenkbar mit dem Rahmen 14 und der Kolben 58 in einem Endbereich 58a ebenfalls schwenkbar mit dem Achsschenkel 48 verbunden. Gemäß dem gezeigten Ausführungsbeispiel ist das als Hydraulikmotor ausgeführte Betätigungselement 54 mit dem in der Art eines Hydrauliksystem ausgebildeten Betätigungssystem 43 verbunden und kann durch dieses derart mit Hydraulikdruck beaufschlagt werden, dass der Kolben 58 in dem Zylinder 56 aus- bzw. eingefahren werden kann.

Figur 3a zeigt das Betätigungselement 54 in einer eingefahrenen Stellung A, in der der Kolben 58 zumindest im Wesentlichen in dem Zylinder 56 angeordnet ist und in der der auf dem Bolzen 50 gelagerte Schwenkarm 48 nach oben bzw. rückwärts verschwenkt ist. In dieser Stellung A ist ein Abstand D2 zwischen dem Rahmen und dem an dem Schwenkarm 48 gelagerten Achsstummel 46 und damit ebenfalls die Höhe H des Rahmens 14 über dem Untergrund 22 am geringsten. Die Figur 3b zeigt das Betätigungselement 5 in einer ausgefahrenen Stellung B, in der der Zylinder 58 zumindest im Wesentlichen außerhalb des Kolbens 56 angeordnet ist und in der der auf dem Bolzen 48 gelagert Schwenkarm 48 nach unten verschwenkt ist. In dieser Stellung B ist Abstand D2 zwischen dem Rahmen 14 und dem an dem Schwenkarm 48 gelagerten Achsstummel 48 und damit die in Figur 3b Höhe H des Rahmens 14 über dem Untergrund 22 am Größten. Neben diesen Extremstellungen ist es möglich Zwischenstellungen vorzusehen, in denen der Kolben 56 mit Bezug auf den Zylinder 58 nur teilweise ausgefahren ist.

Im Folgenden soll nun auf die Funktionsweise der höhenveränderlichen Anlenkung der Räder 20a, b genauer eingegangen werden. Hierfür werden die Ausgabewerte der Sensoren S1, S2 herangezogen, die zuvor bereits beschrieben wurden.

Wird das Erntebergungsgerät 10 auf einem im Wesentlichen ebenen Untergrund betrieben, so liefern die Sensoren S1, S2 konstante Werte bzw. die von den Sensoren S1, S2 gelieferten Werte befinden sich innerhalb eines durch einen unteren und/oder einen oberen Schwellenwert begrenzten Bereichs. Dieser Bereich bzw. die Schwellenwerte können so vorgewählt werden, dass eine möglichst störungsfreie Funktion der Aufnahmeeinrichtung 28 bzw. der Fördereinrichtung 34 und damit ein behinderungsfreier Gutfluß gewährleistet ist. Beispielsweise kann insbesondere für die Höhe D1 der Aufnahmeeinrichtung 28 über dem Untergrund 22 auch ein Zielwert vorgegeben sein.

Überfährt das Erntebergungsgerät 10 einen unebenen Untergrund, muss es Steigungen oder Abhänge oder Vertiefungen/Erhöhungen überwinden, so folgt die sich über ihre Stützräder 29 auf dem Untergrund 22 abstützende Aufnahmeeinrichtung 28 einer Kontur des Untergrunds 22. Der sich über die Räder 20a, b auf dem Untergrund 22 abstützende Rahmen des Erntebergungsgeräts 10 und somit die mit diesem verbundene Fördereinrichtung 34 folgt der Kontur zeitverzögert. Dadurch verändert sich der Winkel α zwischen der Aufnahmeeinrichtung 28 und der mit ihr beweglich verbundenen Fördereinrichtung.

Diese Winkel α bzw. eine Veränderung des Winkels α wird durch den zwischen der Aufnahmeeinrichtung 28 und der Fördereinrichtung 34 angeordnete Sensor S1 aufgenommen. Der Sensor S1 liefert einen entsprechenden Wert an die Steuer- bzw. Regeleinrichtung ECU. Die Steuer- bzw. Regeleinrichtung ECU verarbeitet den durch den Sensor S1 zur Verfügung gestellten Wert. Beispielsweise kann ermittelt werden, ob der Wert einen oberen oder einen unteren Schwellwert über- oder unterschreitet und/oder der Wert außerhalb eines vorgegebenen Bereichs liegt.

In Abhängigkeit von dem ermittelten Wert steuert oder regelt die Steuer- bzw. Regeleinrichtung ECU das Betätigungselement 34 derart, dass das Betätigungselement 34 die Höhe H des Rahmens 14 entsprechend anpasst, so dass der Winkel α den oberen oder unteren Schwellwert nicht länger über- oder unterschreitet bzw. innerhalb eines vorgegebenen Bereichs liegt. Es kann auch vorgesehen sein, dass die Schwellwerte/der Bereich fest vorgegeben sind oder aber, beispielsweise durch einen Bedienungsperson oder auch automatisch durch die Steuer- bzw. Regeleinrichtung ECU, eingestellt werden können.

Hierfür wirkt die Steuer- bzw. Regeleinrichtung ECU auf das Betätigungssystem 43. Dieses ist gemäß dem gezeigten Ausführungsbeispiel als ein Hydrauliksystem 43 ausgebildet, wie es an vielen bekannten Erntebergungsgeräten bereits vorgesehen ist, um bewegliche Bauteile, wie Rotoren, Walzen, Wickelarme etc. zu bewegen. Über das Hydrauliksystem 43 wird das Betätigungselement 54 derart mit Hydraulikdruck beaufschlagt, dass sich der Kolben 58 in dem Zylinder 56 bewegt und dadurch die Höhe H des Rahmens 14 über dem Untergrund 12 erhöht bzw. reduziert, indem er den Schwenkarm 48 und damit das an ihm drehbar aufgenommene Rad 20a, b verschwenkt.

Bevorzugt werden die beiden Räder 20a, b parallel bzw. synchron bewegt. Es ist aber auch denkbar, dass die Räder 20a, b bzw. die den Rädern 20a, b zugeordneten Schwenkarm 48 unabhängig angesteuert bzw. geregelt werden, beispielsweise um eine Neigung des Rahmens 14 in Rechts-Links-Richtung auszugleichen.

Durch den Sensor S2 kann darüber hinaus ein den Abstand D1 zwischen der Aufnahmeinrichtung 28 und dem Untergrund repräsentierender Wert als weitere Steuer- bzw. Regelgröße herangezogen werden, beispielsweise in der Art, dass die Steuer- bzw. Regeleinrichtung ECU das Betätigungselement 54 über das Betätigungssystem 43 zur Veränderung der Stellung des Kolbens 58 in dem Zylinder 56 nur dann mit Hydraulikdruck beaufschlagt, wenn der Sensor S2 einen vorgegebenen Wert liefert und/oder einen Schwellwert über- oder unterschreitet.

## Patentansprüche

1. Erntebergungsgerät (10) mit einem Rahmen (14), der sich über wenigstens zwei Räder (20a, b) mittels zumindest eines Betätigungselements (54) höhenverstellbar auf dem Untergrund (22) abstützt, einer an dem Rahmen (14) höhenveränderlich aufgenommenen Aufnahmeeinrichtung (28) und einer beweglich an die Aufnahmeeinrichtung (28) anschließenden Fördereinrichtung (34), **dadurch gekennzeichnet, dass** wenigstens ein erster Sensor (S1) vorgesehen ist, der einen Winkel (o) zwischen der Aufnahmeeinrichtung (28) und der Fördereinrichtung (34) aufnimmt und das Betätigungselement (54) die Höhe (H) des Rahmens (14) über dem Untergrund (22) in Abhängigkeit von einem von dem Sensor (S1, S2) ermittelten Wert bestimmt.

2. Erntebergungsgerät nach Anspruch 1, **dadurch gekennzeichnet, dass** eine elektronische Steuer- bzw. Regeleinrichtung (ECU) vorgesehen ist, die das Betätigungselement (54) zumindest in Abhängigkeit von dem Wert steuert bzw. regelt.

3. Erntebergungsgerät nach Anspruch 1 oder 2, **dadurch gekennzeichnet, dass** das Betätigungselement (54) bzw. die Steuer- bzw. Regeleinrichtung (ECU) den Winkel (o) zumindest im Wesentlichen konstant hält und/oder die Höhe (H) verändert, wenn ein Schwellwert unter- bzw. überschritten wird.

4. Erntebergungsgerät nach einem der vorherigen Ansprüche, **dadurch gekennzeichnet, dass** wenigstens ein weiterer Sensor (S2) vorgesehen ist, der einen Abstand (D1) der Aufnahmeeinrichtung (28) vom Untergrund (22) aufnimmt, wobei vorzugsweise das Betätigungsmittel (34) bzw. die Steuer- bzw. Regeleinrichtung (ECU) die Höhe (H) des Rahmens (14) über dem Untergrund (22) in Abhängigkeit der von den Sensoren (S1, S2) ermittelten Werten bestimmt.

5. Erntebergungsgerät nach einem der vorherigen Ansprüche, **dadurch gekennzeichnet, dass** die Räder (20a, b) einzeln um einen Schwenkpunkt schwenkbar an dem Rahmen (14) angebracht sind und/oder dass wenigstens ein Schwenkarm (48) vorgesehen ist, der vorzugsweise einenends an dem Rahmen (14) angebracht ist und an dem andernends wenigstens eines der Räder (20a, b) drehbar aufgenommen ist und vorzugsweise das Betätigungselement (54) einenends an dem Rahmen (14) und andernends, vorzugsweise zwischen dem Schwenkpunkt und dem Rad (20a, b) an dem Schwenkarm (48) angreift.

6. Erntebergungsgerät nach einem der vorherigen Ansprüche, **dadurch gekennzeichnet, dass** das Betätigungselement (54) in der Art eines vorzugsweise einen Zylinder (56) und einen Kolben (58) aufweisenden Hydraulikmotors ausgebildet ist.

7. Erntebergungsgerät nach einem der vorherigen Ansprüche, **dadurch gekennzeichnet, dass** zwei Schwenkarme (48) und/oder zwei Betätigungselemente (54) vorgesehen sind, wobei vorzugsweise einer der Schwenkarme (48) und/oder eines der Betätigungselemente (54) auf einer ersten Seite des Rahmens (14) und der andere Schwenkarm (48) und/oder das andere der Betätigungselemente (54) auf der gegenüberliegenden Seite des Rahmens (14) vorgesehen ist/sind.

8. Erntebergungsgerät nach einem der vorherigen Ansprüche, **dadurch gekennzeichnet, dass** das Erntebergungsgerät (10) wenigstens eine Presse (16) zur Herstellung eines Ballens und/oder einen Ballenwickler (18) zur Umwicklung eines Ballens mit einem Hüllmaterial (42) aufweist.

9. Verfahren zum Betrieb eines Erntebergungsgeräts (10) nach einem der vorherigen Ansprüche, **dadurch gekennzeichnet, dass** ein erster Sensor (S1) einen Winkel (o) zwischen der Aufnahmeeinrichtung (28) und der Fördereinrichtung (34) aufnimmt und das Betätigungselement bzw. die Steuereinrichtung (ECU) die Höhe (H) des Rahmens (14) über dem Untergrund (12) zumindest in Abhängigkeit von einem von dem ersten Sensor (S1) ermittelte Wert, insbesondere wenn dieser Wert einen Schwellenwert über- bzw. unterschreitet, verändert, um den Winkel (o) zumindest im Wesentlichen konstant zu halten.

10. Verfahren nach Anspruch 9, **dadurch gekennzeichnet, dass** ein weiterer Sensor (S2) vorgesehen ist, der einen Abstand (D1) der Aufnahmeeinrichtung (28) über dem Untergrund (22) aufnimmt und das Betätigungselement (54) bzw. die Steuer- bzw. Regeleinrichtung (ECU) die Höhe (H) des Rahmens (14) über dem Untergrund (22) in Abhängigkeit von den von beiden Sensoren (S1, S2) ermittelten Werten bestimmt.
